# EUROPEAN PATENT SPECIFICATION

(11) **EP 1 423 254 B1**
(45) Date of publication and mention of the grant of the patent: **25.01.2006**
(21) Application number: 02758558.7
(22) Date of filing: 30.08.2002
(51) Int. Cl.: B29C 63/00, B29C 63/04, F16L 58/10, B21C 37/09

(54) **PROCESS AND APPARATUS FOR CONTINUOUSLY APPLYING AN EXTERNAL COATING TO A PIPE**
VERFAHREN UND VORRICHTUNG ZUR KONTINUIERLICHEN AUFTRAGUNG EINER AUSSENBESCHICHTUNG AUF EIN ROHR
PROCEDE ET APPAREIL POUR L'APPLICATION CONTINUE D'UN REVETEMENT EXTERNE SUR UN TUYAU

(30) Priority: 30.08.2001 GB 0121015
(43) Date of publication of application: 02.06.2004
(73) Proprietor: Bredero Price Coaters Limited, Leith, Edinburgh EH6 7DT (GB)
(72) Inventor: DUNS, Mark, North Berwick EH39 4RW (GB)
(74) Representative: Campbell, Arlene
(86) International application number: PCT/GB2002/003966
(87) International publication number: WO 2003/020494

(56) References cited:
- WO-A-00/73693
- US-A- 4 961 798
- US-A- 5 720 834

## Description

This invention relates to coating procedures and equipment, and relates more particularly but not exclusively to pipe coating procedures and equipment for ensuring a minimum thickness of coating is provided over the weld seam of a pipe.

In the context of pipelines that are employed for long-distance bulk transport of oil, it is known for steel pipes to be employed, individual lengths of pipe being welded end-to-end or otherwise mutually coupled in any suitable manner to form the requisite length of pipeline. An individual steel pipe is usually fabricated from a strip of steel that is rolled or otherwise shaped to form a cylinder with strip edges that are on mutually opposite sides of the strip when flat and unrolled/unshaped being brought together by the rolling or other shaping procedure to form the cylindrical pipe, whereupon these meeting edges are welded together to complete the basic steel pipe. The pipe may be formed from steel strip that is transversely curved by rolling such that the weld in the completed pipe is straight, longitudinal, and essentially parallel to the longitudinal axis of the pipe. Alternatively, the pipe may be formed from steel strip that is spirally wound such that the weld in the completed pipe is a helix that extends both around and along the pipe. Steel pipes may also be fabricated by other procedures. However welded, a feature common to welded pipes is that the weld constitutes an external surface discontinuity where the overall diameter of the pipe is locally increased above the nominally uniform external diameter of the pipe away from the weld. While the invention is particularly concerned with steel pipes that have straight welds, the invention is applicable (with suitable modifications) to the treatment of spirally welded pipes, and to pipes fabricated by other procedures, where such pipes have welds or other surface discontinuities requiring treatment by the procedures and equipment of the invention, as will subsequently be detailed.

Once shaped and welded, steel pipe is usually subjected to further procedures prior to utilisation in a pipeline. Apart from inspection and testing, pipes intended for use in a pipeline are commonly provided with an external coating, e.g. for protection against corrosion and/or to increase the weight per unit length of pipe so as to impart a reduced or negative buoyancy for submarine use of a pipeline. It is known to coat the exteriors of pipes with polyethylene or polypropylene by means of an extrusion process wherein the pipe is passed through an extrusion die, but such a known extrusion process cannot easily or economically take account of the locally increased diameter of the pipe occasioned by the weld, and the coated pipe has a significantly reduced thickness (as measured in the radial direction relative to the cylindrical pipe) of coating over the weld relative to the thickness of coating on the exterior of the pipe away from the weld. Where it is necessary or desirable to have a minimum thickness of coating over the total external surface of the pipe (including the weld), either the thickness of the applied coating all around the pipe must be increased sufficiently so as to ensure a satisfactory minimum thickness over the weld (which is uneconomical use of coating material), or the coating must have its thickness locally increased over the extruded thickness in the immediate vicinity of the weld.

A procedure and equipment for locally increasing the thickness of coating over the weld on a coated pipe is described in International patent publication WO00/73693A1. The invention of WO00/73693A1 concerns the formation and attachment of patches to a coated pipe, the patches being cut in short lengths from a reel of tape-form patching material and applied to the periphery of the pipe in a circumferential direction so as locally to cover the weld. Document US 4,961,798 in the name of Commercial Resins Company also describes a procedure and equipment for locally increasing the thickness of coating over the weld on a coated pipe. Documents WO00/73693A1 and US 4,961,798 do not describe how the thickness of coating on a pipe can be locally and selectively increased by a continuous process applied along a continuous strip of indefinite length. It is an object of the present invention to provide coating procedures and equipment that obviate or mitigate the disadvantages of prior art coating procedures and equipment.

According to a first aspect of the present invention there is provided a process for continuously applying an external coating along a predetermined region of a pipe, said process being characterised by the steps of heating the pipe along said predetermined region, applying a heated strip of coating material along said predetermined region, adhering the applied strip of heated coating material onto underlying pipe, and causing or allowing the pipe and coating material to cool substantially to ambient temperature.

According to a second aspect of the present invention there is provided a process for continuously applying an external coating along a predetermined region of a pipe whose exterior has previously been at least partially coated with a first coating material along at least part of said predetermined region, said process being characterised by the steps of heating the pipe along said predetermined region, heating the previously applied coating of first coating material where it exists along said predetermined region, applying a heated strip of a second coating material along said predetermined region, adhering the applied strip of heated second coating material onto underlying pipe and/or consolidating the applied strip of heated second coating material onto underlying previous coating of first coating material, and causing or allowing the pipe and coating materials to cool substantially to ambient temperature. Said first and second coating materials may be either mutually substantially identical materials, or mutually different materials.

In said first and second aspects of the present inventions, the pipe is preferably heated to an extent that the heated pipe is not so cool as to absorb heat prior to the end of the step of consolidation in a quantity sufficient to degrade adequate performance of the process, the step of heating the pipe preferably being performed by induction heating. In the second aspect of the present invention, the step of heating the previously applied coating of first coating material is preferably performed by radiant heating. (Induction heating has the advantage of enabling preheating of the pipe, where the pipe is of steel or some other material susceptible to electromagnetic induction heating, whereas radiant or flame heating would require heat to be transferred through coating materials that normally have limited thermal conductivity, particularly if selected for thermal insulation, and a limited ability to withstand high temperatures without melting and/or charring. On the other hand, radiant heating as applied to a previous coating over pipe that is now preheated will heat the previous coating, directly and without the underlying pipe acting as a thermal sink for the radiantly applied heat).

In said first aspect of the present invention, the pipe is preferably first scraped and/or otherwise mechanically treated such as to expose a surface that is substantially clean and free of oxidation. In said second aspect of the present invention, the pipe (where exposed) and the previous coating of first coating material (where applied) are preferably first scraped and/or otherwise mechanically treated such as to expose a surface that is substantially clean and free of oxidation.

In said first and second aspects of the present invention, the heated strip of coating material may be extruded in a molten or thermoplasticised state, the extruding die therefor preferably being located as close as possible to the predetermined region of the pipe. The extruding die may be held stationary with the pipe being suitably moved thereunder, or the pipe may be held stationary with the extruding head being suitably moved over the pipe, or both the pipe and the extruding die may be given suitable movements. The applied strip of coating material may be adhered or consolidated by suitable application of a pressure roller, or by any other suitable means. The pipe and adhered/consolidated coating material(s) may be caused to cool by being quenched with water, or be allowed to cool by unassisted radiation and convection to ambient atmosphere.

The first and second aspects of the present invention may further include a subsequent step of testing of the adhered/consolidated coating material(s) for gaps or voids therein by subjecting the coating to high-voltage electric field applied between an external electrode and the material of the underlying pipe (where the pipe material is electrically conductive to a suitable extent, e.g. where the pipe is of steel or another metal).

According to third aspect of the present invention there is provided equipment for continuously applying an external coating along a predetermined region of a pipe, said equipment characterised in that it comprises pipe-heating means for heating the pipe along said predetermined region, strip heating and applying means for applying a heated strip of coating material along said predetermined region, and adhering/consolidating means for adhering the applied strip of heated coating material onto underlying pipe and/or for consolidating the applied strip of heated second coating material onto underlying previous coating of first coating material.

In said third aspect of the present invention where said pipe has an exterior that has previously been at least partially coated with a first coating material along at least part of said predetermined region and said equipment additionally comprises coating-heating means for heating the previously applied coating of first coating material where it exists along said predetermined region.

In said third aspect of the present invention and where the pipe is formed of steel or any other material that is adequately susceptible to electromagnetic induction, said pipe-heating means is preferably electromagnetic induction heating means. In said third aspect of the present invention, said coating-heating means is preferably radiant heating means.

In said third aspect of the invention, said strip heating and applying means may comprise an extrusion die incorporating or associated with a heater for heating and extruding a strip of the second coating material, the die and heater preferably being mounted as close as practicable to said predetermined region of the pipe. The equipment may comprise pipe-holding means for holding the pipe static and die/heater traversing means for traversing the die and heater along the static pipe, or the equipment may conversely comprise die/heater holding means for holding the die and heater static and pipe-traversing means for traversing the pipe past the die and heater, or both pipe and die/heater may be made suitably movable. Means for causing relative movement between the pipe and the die/heater will be such as to track the weld or other surface discontinuity that is to be strip-coated, whether the weld or other discontinuity is a straight line, a helix, or traces any other shape of path along the exterior of the pipe, and regardless of whether the weld or other surface discontinuity is continuous or intermittent along its path. The adhering/consolidating means may comprise a pressure roller.

Equipment according to the third aspect of the present invention may further comprise cooling means for finally causing the pipe and coating material(s) to cool substantially to ambient temperature, the cooling means preferably taking the form of a water quench system. Alternatively, the pipe and coating material(s) may simply be exposed to ambient atmosphere to allow natural cooling.

Embodiments of the invention will now be described, by way of example only, with reference to the accompanying drawings wherein:
Fig. 1 is a block schematic diagram of plant including equipment units for carrying out the invention; and
Fig. 2 is a block schematic diagram of sub-units within a unit of equipment comprised in the plant depicted in Fig. 1

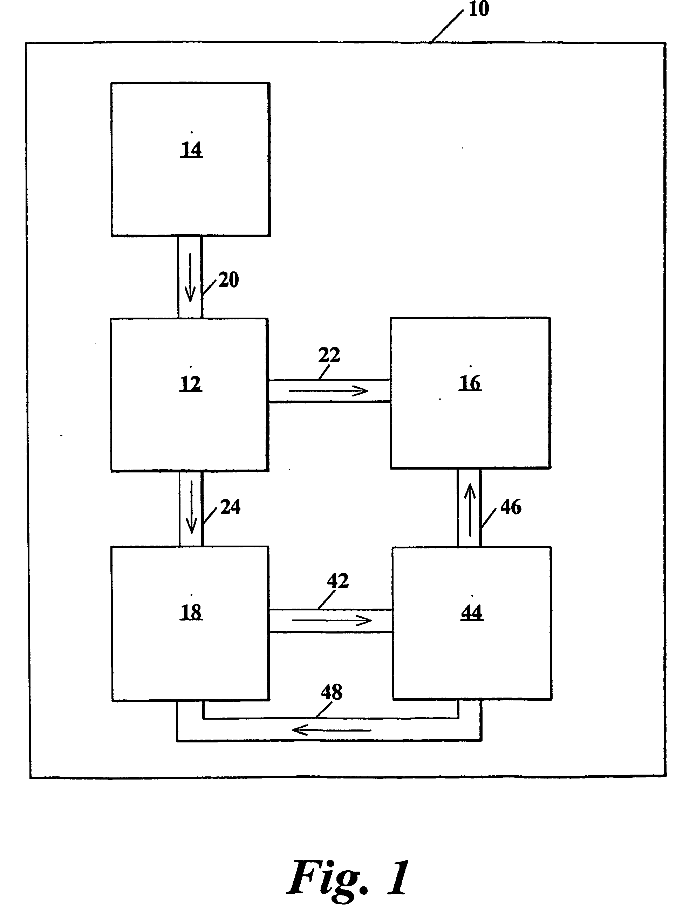

Referring first to Fig. 1, a remediation plant 10 is established with an internal pipe-handling and conveyor system for controlled movement of longitudinally welded steel pipes (not shown) that had previously been extrusion-coated with polypropylene, but where the coating over the welds was frequently insufficient or absent. The remediation plant 10 includes an pre-inspection unit 12 set up between a first pipe rack 14 holding uninspected pipes, and a second pipe rack 16 for holding pipes that either pass inspection without requiring remediation, or that are successfully remediated in a subsequent coating unit 18. The pipes are of longitudinally welded steel, cylindrical with a nominal external diameter of twenty-four inches (about 61 centimetres), and with a wall thickness of 31.8 millimetres. The pipes have previously been externally coated (at a location away from the plant 10) with a three layer system which may include fusion bonded epoxy and polypropylene with the intention that the polypropylene coating should cover the entire external wall of the pipe, and that the polypropylene coating should have a minimum thickness of 3.6 millimetres over the weld seam.

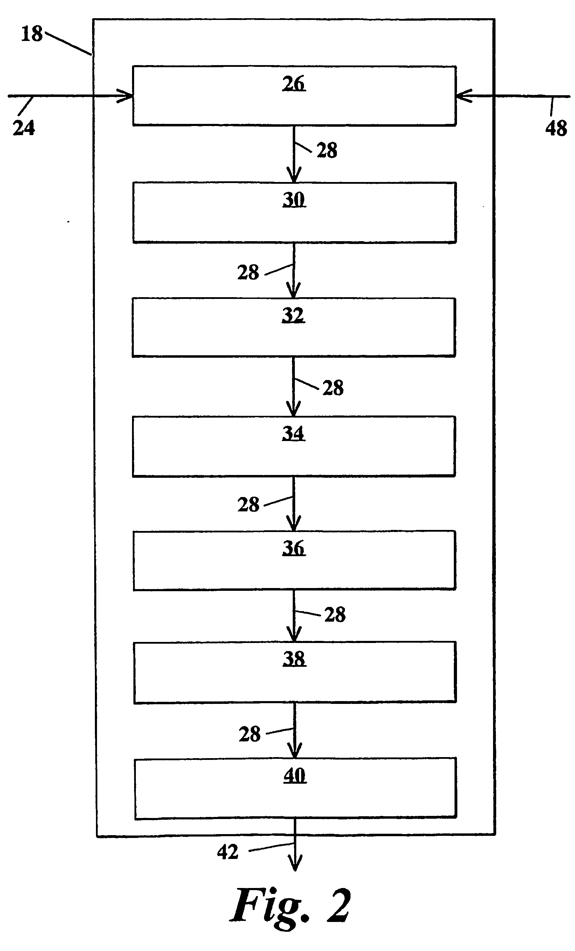

Pipes are individually brought down from the first rack 14, and passed along a conveyor or other suitable pipe transport/handling device 20 to the pre-inspection unit 12 where the pipes are individually inspected/tested, visually and/or electrically, for gaps and voids in the initial external coating of polypropylene. Satisfactory pipes (i.e. pipes that pass inspection/testing in the unit 12) are then placed on a shunt conveyor 22 that passes the satisfactory pipes directly to the second pipe rack 16. Pipes that fail inspection/testing in the pre-inspection unit 12 are individually fed along a further conveyor 24 to the coating unit 18 (whose internal arrangement is schematically detailed in Fig. 2).

Referring now to Fig. 2 in detail, within the coating unit 18, pipes to be re-coated are initially fed into a marking sub-unit 26 wherein each pipe to be re-coated is first given a high-visibility mark (e.g. a chalk line) along the weld as an aid to subsequent rotational alignment around the longitudinal axis of the pipe. Pipes being treated within the coating unit 18 are subsequently transported between the sub-units of unit 18 by means of a pipe conveyor or other suitable pipe handling/transporting device 28 that controllably moves each pipe in a longitudinal direction while maintaining each pipe in a controlled rotational alignment with respect to the pipe-treating components of each sub-unit (the pipe normally being rotationally held such that the weld seam is at the topmost point of the pipe, i.e. directly above the longitudinal axis of the pipe; the conveyor or other handling/transporting device 28 includes suitable means for correcting any deviation of the pipe from its intended rotational alignment).

Each pipe selected for and directed to the coating unit 18 is then passed by the conveyor 28 from the marking sub-unit 26 to a cleaning sub-unit 30, the mark applied to the pipe within the marking sub-unit 26 assisting in correct rotational alignment of the pipe during its conveyance. Within the cleaning sub-unit 30, the original coating on the pipe is scraped and/or mechanically abraded along the weld seam and for approximately fifty millimetres on either side of the weld seam, such as to expose a fresh clean surface along the entire length of the pipe in a region that was thereby predetermined for remedial coating as will subsequently be detailed. While the pipe coating can be scraped by passing the pipe under a scraper blade, it is preferred for ease of control of the cleaning process that the original coating be cleaned along the predetermined strip by means of a slowly rotating sanding drum having a width of 100 millimetres, followed by the application of air jets to remove loose debris.

The cleaned pipe is then carried by the conveyor 28 from the cleaning sub-unit 30 to a pre-heating sub-unit 32, the mark applied to the pipe within the marking sub-unit 26 continuing to assist in correct rotational alignment of the pipe during its conveyance. In the pre-heating sub-unit 32, the pipe is preheated by being longitudinally passed under an induction heater system that employs either a single induction heater (with an output of thirty kW) or an in-line array of three induction heaters (longitudinally spaced along the path of pipe movement, and each having an output of ten kW) to provide focused heating of the pipe along a longitudinal strip of approximately 100 millimetres width, laterally centred on the longitudinal weld. Heating of the steel of the pipe is induced in a controlled manner such as to increase the metal temperature to 120-160 degrees Centigrade. The purpose of raising the steel temperature was to impart heat to the substrate of the original coating so as to slow the loss the heat from subsequent secondary surface heating (detailed below) and thereby facilitate a time window within which an extruded molten coating could be applied and consolidated before the surface heat dissipated.

After the induction preheating (detailed above), the preheated pipe is immediately passed by the conveyor 28 from the pre-heating sub-unit 32 to a radiant heating sub-unit 34. Within the radiant heating sub-unit 34, the preheated pipe is passed under a bank of ceramic radiant heaters which impart heat into the original surface coating on the pipe, the heat imparted by the radiant heaters being sufficient to ensure that the original coating material is thermally softened to a depth of approximately 2 millimetres. (The induction pre-heating of the pipe metal ensures that the pipe does not act as a heat sink that drains radiantly applied heat from the coating to an extent that prevents proper heating of the original coating).

The spacing of the induction heater(s) within the induction heating sub-unit 32 from the radiant heaters within the radiant heating sub-unit 34, together with other operating parameters such as (for example) the physical characteristics of the pipe, the longitudinal speed of the pipe, and the induction heating power, is designed to generate the desired temperature gradient between the pipe and its original coating such that heat induced in the pipe metal reaches the coating just as that pre-heated stretch of pipe reaches the radiant heater. To achieve a coating temperature of about ninety degrees Centigrade, the inductor coils (in the three-heater array of induction heaters) are spaced approximately 400 millimetres apart, with the last inductor coil being spaced approximately 500 millimetres from the radiant heating sub-unit 34 in a direction along pipe travel. In setting-up of the coating unit 12, it was found to be important that heater locations and conveyor speeds were correctly adjusted to ensure that the heat supplied to the coating adjacent the weld is not lost to surrounding coating, and that the coating within the predetermined strip adjacent the weld reaches the correct temperature at the correct time. The induction coils in the pre-heating sub-unit 32 are suspended approximately ten millimetres above the pipe, while the radiant heater in the radiant heating sub-unit 34 is suspended approximately fifty millimetres above the pipe. The longitudinal speed of the conveyor 28 is adjusted to transport pipes through the coating unit 18 at a longitudinal speed of approximately one metre per hour so as to achieve correct heating, and this conveyor speed corresponds to a throughput of approximately five pipes per hour.

After the preparation and preheating described above, the pipe is immediately passed by the conveyor 28 under an extrusion sub-unit 36 wherein a heated extrusion die extrudes a molten or heat-softened strip of supplementary coating material, the strip having a thickness of approximately 1.5 millimetres and a width of approximately 100 millimetres. The extrusion die within the sub-unit 36 is located approximately 150 millimetres above the pipe (aligned with its weld seam uppermost), the die being aligned so that the extruded strip is directly applied to the predetermined region of the pipe, i.e. the region of the weld seam and fifty millimetres on either side of the weld seam. The extrusion sub-unit 36 is located immediately downstream of the radiant heating sub-unit 34 so as to minimise the lapse of time between preparation (including preheating) of the predetermined region, and the application of the extruded strip. The heated extrusion die can take any suitable form, and it is preferred to employ a screw extruder wherein a screw having a diameter of forty millimetres is rotated at a speed selected to deliver a requisite amount of coating strip (as measured by quantity of coating strip per unit time during pipe movement under the extrusion sub-unit 36), such an amount being approximately six kilogrammes per hour for pipes of the previously detailed dimensions.

As soon as the extruded strip is laid on the predetermined region, the pipe is carried by the conveyor 28 under a consolidating sub-unit 38 where the extruded strip is consolidated onto the original coating (or adhered onto the pipe where there are gaps in the original coating) by means of a pressure roller that is disposed to press the extruded strip firmly onto the hot original coating and pipe. If necessary or desirable, the newly consolidated coating materials may be sprinkled with a suitable sinter material while still adequately hot as to ensure adhesion of the sinter material.

The consolidated coatings (original and newly applied supplementary coating strip) are then force-cooled by being carried by the conveyor 28 under a water quench system 40.

Reverting to Fig. 1, pipes treated in the coating unit 18 by the process and equipment described above with reference to Fig. 2 are then conveyed by a pipe conveyor or other suitable pipe handling/transporting device 42 to a post-inspection unit 44 wherein the newly treated pipes are subjected to visual inspection to ensure that the re-coated surface have a uniform colour and gloss, and are free of visible surface defects such as blisters and sags. The treated pipes are next subjected within the post-inspection unit 44 to electrical inspection for voids and gaps in the consolidated coatings. A suitably shaped electrode (not shown) is passed across the re-coated surface, in constant contact with the surface and at a speed not exceeding 25 centimetres per second. Using the steel wall of the pipe as a ground connection, the electrode is charged to a minimum of 25 kilovolts. A detector (not shown) connected to the electrode and pipe senses the change in electrical properties of the test arrangement when the electrode passes over a gap or void, and outputs a recognisable fault indication.

The coatings on pipes that pass visual and electrical inspection are then tested for compliance with the specified minimum thickness of 3.6 millimetres over the weld seam by means of an electromagnetic gauge.

Pipes that pass all the tests and inspections within the post-inspection unit 44 are placed on a pipe conveyor or other suitable pipe handling/transporting device 46 for conveyance to the second pipe rack 16 where the re-coated pipes are stored until required for use at a location beyond the remediation plant 10.

Pipes that fail any of the visual, electrical, and electromagnetic inspections within the post-inspection unit 44 are rejected, and have the newly applied coating strip removed. Subsequently, the rejected pipes are placed on a pipe conveyor 48 for return to and re-passage through the coating unit 18. The processes of supplementary strip coating and inspection are repeated within the units 18 and 44 until each pipe fully satisfies all the inspection procedures, and meet all the acceptance criteria, whereupon the now satisfactory pipes are placed on the conveyor 46 for transfer to the second pipe rack 16.

As applied to longitudinally welded pipes, the pipes normally pass longitudinally through the coating unit 18 line without any rotation other than is necessary to counteract inadvertent rotational misalignment that might occur during passage of the pipe. (The initial visible marking of the weld seam in the marking sub-unit 26 by a chalk-line or other marking assists in the initial angular alignment of the pipe around its longitudinal axis during setting-up for processing, and also assists in checking the maintenance of correct angular alignment throughout the coating and inspection processes). Where the pipe was spirally wound and completed with a helical weld, the pipe in its passage through the coating unit 18 is given a rotation that is in constant ratio to the longitudinal progress of the pipe (plus or minus any angular correction necessary to maintain rotational alignment); the heated extrusion die within the extrusion sub-unit 36 is also realigned such that the discharge direction of the extrusion die is changed from longitudinal (with respect to the pipe) to alignment with the helix angle of the weld such that the extrusion direction of the heated supplementary coating strip remains parallel to the weld seam. Realignment of the various sub-units for marking, heating and scrapping etc would also be required.

While certain modifications and variations of the invention of the invention have been described above, the invention is not restricted thereto, and other modifications and variations can be adopted, within the scope of the claims.

## Claims

1. A process for continuously applying an external coating along a predetermined region of a pipe, said process being **characterised by** the steps of heating the pipe along said predetermined region, applying a heated strip of coating material along said predetermined region, adhering the applied strip of heated coating material onto underlying pipe, and causing or allowing the pipe and coating material to cool substantially to ambient temperature.

2. A process for continuously applying an external coating along a predetermined region of a pipe whose exterior has previously been at least partially coated with a first coating material along at least part of said predetermined region, said process being **characterised by** the steps of heating the pipe along said predetermined region, heating the previously applied coating of first coating material where it exists along said predetermined region, applying a heated strip of a second coating material along said predetermined region, adhering the applied strip of heated second coating material onto underlying pipe and/or consolidating the applied strip of heated second coating material onto underlying previous coating of first coating material, and causing or allowing the pipe and coating materials to cool substantially to ambient temperature.

3. A process according to claim 1 or 2, wherein the pipe is heated to an extent that the heated pipe is not so cool as to absorb heat prior to the end of the step of consolidation in a quantity sufficient to degrade adequate performance of the process.

4. A process according to claim 3, wherein the step of heating the pipe is performed by induction heating.

5. A process according to claim 2, or 3 or 4 each when dependent on claim 2, wherein the step of heating the previously applied coating of first coating material is performed by radiant heating.

6. A process according to claim 1 or claims 3 or 4 each when dependent upon claim 1, wherein the pipe is first scraped and/or otherwise mechanically treated such as to expose a surface that is substantially clean and free of oxidation.

7. A process according to claim 2 or claims 3 to 5 each when dependent on claim 2, wherein the pipe (where exposed) and the previous coating of first coating material (where applied) are first scraped and/or otherwise mechanically treated such as to expose a surface that is substantially clean and free of oxidation.

8. A process according to any preceding claim, wherein the heated strip of coating material is extruded in a molten or thermoplasticised state, the extruding die therefor being located as close as possible to the predetermined region of the pipe.

9. A process according to any preceding claim, wherein the applied strip of coating material is adhered or consolidated by application of a pressure roller.

10. A process according to claim 9, wherein the pipe and adhered/consolidated coating material(s) is caused to cool by being quenched with water.

11. A process according to claim 9, wherein the pipe adhered/consolidated coating material(s) is allowed to cool by unassisted radiation and convection to ambient atmosphere.

12. A process according to claim 9, 10 or 11, wherein the process further includes a subsequent step of testing of the adhered/consolidated coating material(s) for gaps or voids therein by subjecting the coating to high-voltage electric field applied between an external electrode and the material of the underlying pipe.

13. Apparatus for continuously applying an external coating along a predetermined region of a pipe, said equipment **characterised in that** it comprises pipe-heating means (32) for heating the pipe along said predetermined region, strip heating and applying means (36) for applying a heated strip of coating material along said predetermined region, and adhering/consolidating means (38) for adhering the applied strip of heated coating material onto underlying pipe and/or for consolidating the applied strip of heated second coating material onto underlying previous coating of first coating material.

14. Apparatus according to claim 13, wherein said pipe has an exterior that has previously been at least partially coated with a first coating material along at least part of said predetermined region and said equipment additionally comprises coating-heating means (34) for heating the previously applied coating of first coating material where it exists along said predetermined region.

15. Apparatus according to claim 13 or 14, wherein said pipe-heating means (32) is electromagnetic induction heating means.

16. Apparatus according to claim 14 or 15, when dependant on claim 14, wherein said coating-heating means (34) is radiant heating means.

17. Apparatus according to any one of claims 13 to 16, wherein said strip heating and applying means (36) comprises an extrusion die incorporating or associated with a heater for heating and extruding a strip of the second coating material.

18. Apparatus according to claim 17, wherein the die and heater are mounted as close as practicable to said predetermined region of the pipe.

19. Apparatus according to any one of claims 13 to 18, wherein the adhering/consolidating means (38) is a pressure roller.

20. Apparatus according to any one of claims 13 to 19, further comprising a cooling means for causing the pipe and coating material(s) to cool substantially to ambient temperature.

21. Apparatus according to claim 20, wherein the cooling means is a water quench system.

22. Apparatus according to claim 20, wherein the pipe and coating material(s) are exposed to ambient atmosphere to allow natural cooling.

## Patentansprüche

1. Verfahren zum kontinuierlichen Aufbringen einer äußeren Beschichtung entlang eines vorbestimmten Bereichs eines Rohrs, wobei das Verfahren durch die Schritte gekennzeichnet ist: Erwärmen des Rohrs entlang des vorbestimmten Bereichs, Aufbringen eines erwärmten Streifens von Beschichtungsmaterial entlang des vorbestimmten Bereichs, Festkleben des aufgebrachten Streifens von erwärmtem Beschichtungsmaterial auf das darunter liegende Rohr, und Bewirken oder Zulassen, dass sich das Rohr und das Beschichtungsmaterial im Wesentlichen auf Umgebungstemperatur abkühlen.

2. Verfahren zum kontinuierlichen Aufbringen einer äußeren Beschichtung entlang eines vorbestimmten Bereichs eines Rohrs, dessen Außenseite zuvor entlang von mindestens einem Teil des vorbestimmten Bereichs mindestens teilweise mit einem ersten Beschichtungsmaterial beschichtet worden ist, wobei das Verfahren durch die Schritte gekennzeichnet ist: Erwärmen des Rohrs entlang des vorbestimmten Bereichs, Erwärmen der zuvor aufgebrachten Beschichtung von erstem Beschichtungsmaterial, wo sie entlang des vorbestimmten Bereichs vorhanden ist, Aufbringen eines erwärmten Streifens von einem zweiten Beschichtungsmaterial entlang des vorbestimmten Bereichs, Festkleben des aufgebrachten Streifens von erwärmtem zweitem Beschichtungsmaterial auf dem darunter liegenden Rohr und/oder Befestigen des aufgebrachten Streifens von erwärmtem zweitem Beschichtungsmaterial auf der darunter liegenden vorangehenden Beschichtung von erstem Beschichtungsmaterial, und Bewirken oder Zulassen, dass sich das Rohr und die Beschichtungsmaterialien im Wesentlichen auf bungstemperatur abkühlen.

3. Verfahren nach Anspruch 1 oder 2, bei dem das Rohr bis zu einem Maß erwärmt wird, dass das erwärmte Rohr nicht so kühl ist, dass es vor dem Ende des Befestigungsschritts Wärme in einer Menge absorbiert, die ausreichend ist, um eine adäquate Durchführung des Verfahrens zu beeinträchtigen.

4. Verfahren nach Anspruch 3, bei dem der Schritt eines Erwärmens des Rohrs durch Induktionserwärmung durchgeführt wird.

5. Verfahren nach Anspruch 2, oder 3 oder 4, jeweils rückbezogen auf Anspruch 2, bei dem der Schritt eines Erwärmens der vorangehend aufgebrachten Beschichtung von erstem Beschichtungsmaterial durch Strahlungserwärmung durchgeführt wird.

6. Verfahren nach Anspruch 1, oder den Ansprüchen 3 oder 4, jeweils rückbezogen auf Anspruch 1, bei dem das Rohr zuerst abgekratzt und/oder auf andere Weise mechanisch behandelt wird, so dass eine Oberfläche freigelegt wird, die im Wesentlichen sauber und frei von Oxidation ist.

7. Verfahren nach Anspruch 2, oder den Ansprüchen 3 bis 5, jeweils rückbezogen auf Anspruch 2, bei dem das Rohr (wo es frei liegt) und die vorangehende Beschichtung von erstem Beschichtungsmaterial (wo sie aufgebracht ist) zuerst abgekratzt und/oder auf andere Weise mechanisch behandelt werden, so dass eine Oberfläche freigelegt wird, die im Wesentlichen sauber und frei von Oxidation ist.

8. Verfahren nach einem vorangehenden Anspruch, bei dem der erwärmte Streifen von Beschichtungsmaterial in einem geschmolzenen oder durch Wärme weich gemachten Zustand extrudiert wird, wobei das Extrusionswerkzeug dafür so nahe wie möglich bei dem vorbestimmten Bereich des Rohrs angeordnet wird.

9. Verfahren nach einem vorangehenden Anspruch, bei dem der aufgebrachte Streifen von Beschichtungsmaterial durch Anwendung einer Andruckwalze festgeklebt oder befestigt wird.

10. Verfahren nach Anspruch 9, bei dem man bewirkt, dass das Rohr und das festgeklebte/befestigte Beschichtungsmaterial (die festgeklebten/befestigten Beschichtungsmaterialien) abkühlen, indem man sie mit Wasser abschreckt.

11. Verfahren nach Anspruch 9, bei dem zulässt, dass sich das Rohr und das festgeklebte/befestigte Beschichtungsmaterial (die festgeklebten/befestigten Beschichtungsmaterialien) durch nicht-unterstützte Abstrahlung und Konvektion an die umgebende Atmosphäre abkühlen.

12. Verfahren nach Anspruch 9, 10 oder 11, bei dem das Verfahren weiter einen nachfolgenden Schritt eines Untersuchens des festgeklebten/befestigten Beschichtungsmaterials (der festgeklebten/befestigten Beschichtungsmaterialien) auf Hohlräume oder Lücken darin einschließt, indem man die Beschichtung einem elektrischen Hochspannungsfeld aussetzt, das zwischen einer äußeren Elektrode und dem Material des darunter liegenden Rohrs angelegt wird.

13. Vorrichtung zum kontinuierlichen Aufbringen einer äußeren Beschichtung entlang eines vorbestimmten Bereichs eines Rohrs, wobei das Gerät **dadurch gekennzeichnet ist, dass** es eine Rohrerwärmungseinrichtung (32) zum Erwärmen des Rohrs entlang des vorbestimmten Bereichs, eine Streifenerwärmungs- und - aufbringeinrichtung (36) zum Aufbringen eines erwärmten Streifens von Beschichtungsmaterial entlang des vorbestimmten Bereichs, und eine Festklebe-/Befestigungseinrichtung (38) zum Festkleben des aufgebrachten Streifens von erwärmtem Beschichtungsmaterial auf darunter liegendem Rohr und/oder zum Befestigen des aufgebrachten Streifens von erwärmtem zweitem Beschichtungsmaterial auf einer darunter liegenden vorangehenden Beschichtung von erstem Beschichtungsmaterial umfasst.

14. Vorrichtung nach Anspruch 13, bei der das Rohr eine Außenseite aufweist, die zuvor entlang von mindestens einem Teil des vorbestimmten Bereichs mindestens teilweise mit einem ersten Beschichtungsmaterial beschichtet worden ist, und das Gerät zusätzlich eine Beschichtungserwärmungseinrichtung (34) zum Erwärmen der vorangehend aufgebrachten Beschichtung von erstem Beschichtungsmaterial, wo sie entlang des vorbestimmten Bereichs vorhanden ist, umfasst.

15. Vorrichtung nach Anspruch 13 oder 14, bei der die Rohrerwärmungseinrichtung (32) eine elektromagnetische Induktionsheizeinrichtung ist.

16. Vorrichtung nach Anspruch 14, oder 15 rückbezogen auf Anspruch 14, bei der die Beschichtungsheizeinrichtung (34) eine Strahlungsheizeinrichtung ist.

17. Vorrichtung nach einem der Ansprüche 13 bis 16, bei der die Streifenerwärmungs- und -aufbringeinrichtung (36) ein Extrusionswerkzeug umfasst, das eine Heizung zum Erwärmen und Extrudieren eines Streifens des zweiten Beschichtungsmaterials einschließt oder damit verbunden ist.

18. Vorrichtung nach Anspruch 17, bei der das Werkzeug und die Heizung so nahe wie machbar bei dem vorbestimmten Bereich des Rohrs angebracht sind.

19. Vorrichtung nach einem der Ansprüche 13 bis 18, bei der die Festklebe-/Befestigungseinrichtung (38) eine Andruckwalze ist.

20. Vorrichtung nach einem der Ansprüche 13 bis 19, weiter umfassend eine Kühleinrichtung zum Bewirken, dass das Rohr und das Beschichtungsmaterial (die Beschichtungsmaterialien) im Wesentlichen auf Umgebungstemperatur abkühlen.

21. Vorrichtung nach Anspruch 20, bei der die Kühleinrichtung eine Wasserabschreckanlage ist.

22. Vorrichtung nach Anspruch 20, bei der das Rohr und das Beschichtungsmaterial (die Beschichtungsmaterialien) Umgebungsatmosphäre ausgesetzt werden, um eine natürliche Abkühlung zuzulassen.

## Revendications

1. Procédé pour appliquer en continu un revêtement externe le long d'une zone prédéterminée d'un tube, ledit procédé étant **caractérisé par** les étapes de chauffage du tube le long de ladite zone prédéterminée, d'application d'une bande chauffée de matériau de revêtement le long de ladite zone prédéterminée, d'adhésion de la bande appliquée de matériau de revêtement chauffé sur le tube sous-jacent, et d'entraînement ou d'autorisation du tube et du matériau de revêtement à refroidir sensiblement à la température ambiante.

2. Procédé pour appliquer en continu un revêtement externe le long d'une zone prédéterminée d'un tube dont l'extérieur a été préalablement au moins en partie revêtu par un premier matériau de revêtement le long au moins d'une partie de ladite zone prédéterminée, ledit procédé étant **caractérisé par** les étapes de chauffage du tube le long de ladite zone prédéterminée, de chauffage du revêtement préalablement appliqué du premier matériau de revêtement où il existe le long de ladite zone prédéterminée, d'application d'une bande chauffée d'un second matériau de revêtement le long de ladite zone prédéterminée, d'adhésion de la bande appliquée de second matériau de revêtement chauffé sur le tube sous-jacent et/ou de consolidation de la bande appliquée du second matériau de revêtement chauffé sur le revêtement sous-jacent précédent du premier matériau de revêtement, et d'entraînement ou d'autorisation du tube et des matériaux de revêtement à refroidir sensiblement à la température ambiante.

3. Procédé selon la revendication 1 ou 2, dans lequel le tube est chauffé d'une manière telle que le tube chauffé n'est pas assez refroidi pour absorber la chaleur antérieure à la fin de l'étape de consolidation dans une quantité suffisante pour dégrader une performance appropriée du procédé.

4. Procédé selon la revendication 3, dans lequel l'étape de chauffage du tube est réalisée par chauffage par induction.

5. Procédé selon la revendication 2, ou 3 ou 4 lorsque chacune dépend de la revendication 2, dans lequel l'étape de chauffage du revêtement préalablement appliqué du premier matériau de revêtement est réalisée par chauffage radiant.

6. Procédé selon la revendication 1 ou les revendications 3 ou 4 lorsque chacune dépend de la revendication 1, dans lequel le tube est tout d'abord raclé et/ou autrement traité mécaniquement afin d'exposer une surface qui est sensiblement propre et sans trace d'oxydation.

7. Procédé selon la revendication 2 ou les revendications 3 à 5 lorsque chacune dépend de la revendication 2, dans lequel le tube (lorsqu'il est exposé) et le revêtement précédent du premier matériau de revêtement (lorsqu'il est appliqué) sont tout d'abord raclés et/ou autrement traités mécaniquement afin d'exposer une surface qui est sensiblement propre et sans trace d'oxydation.

8. Procédé selon l'une quelconque des revendications précédentes, dans lequel la bande chauffée de matériau de revêtement est extrudée dans un état fondu ou thermoplastifié, la filière étant par conséquent située aussi près que possible de la zone prédéterminée du tube.

9. Procédé selon l'une quelconque des revendications précédentes, dans lequel la bande appliquée de matériau de revêtement est adhérée ou consolidée par application d'un rouleau de pression.

10. Procédé selon la revendication 9, dans lequel le tube et le(s) matériau(x) de revêtement adhéré(s)/consolidé(s) sont amenés à refroidir en étant trempés dans de l'eau.

11. Procédé selon la revendication 9, dans lequel le tube et le(s) matériau(x) de revêtement adhéré(s)/consolidé(s) sont autorisés à refroidir par radiation et convection non assistées avec l'atmosphère ambiante.

12. Procédé selon la revendication 9, 10 ou 11, dans lequel le procédé comprend en outre une étape suivante de test du(des) matériau(x) de revêtement adhéré(s)/consolidé(s) à la recherche de jeux ou de vides dans celui-ci(ceux-ci) en soumettant le revêtement à un champ électrique haute tension appliqué entre une électrode externe et le matériau du tube sous-jacent.

13. Appareil pour appliquer en continu un revêtement externe le long d'une zone prédéterminée d'un tube, ledit équipement **caractérisé en ce qu'**il comprend des moyens de chauffage de tube (32) pour chauffer le tube le long de ladite zone prédéterminée, des moyens de chauffage et d'application de bande (36) pour appliquer une bande chauffée de matériau de revêtement le long de ladite zone prédéterminée, et des moyens d'adhésion/consolidation (38) pour adhérer la bande appliquée de matériau de revêtement chauffé sur le tube sous-jacent et/ou pour consolider la bande appliquée de second matériau de revêtement chauffé sur le revêtement sous-jacent précédent du premier matériau de revêtement.

14. Appareil selon la revendication 13, dans lequel ledit tube comprend un extérieur qui a été préalablement au moins en partie revêtu par un premier matériau de revêtement le long d'au moins une partie de ladite zone prédéterminée et ledit équipement comprend de plus des moyens de chauffage de revêtement (34) pour chauffer le revêtement préalablement appliqué du premier matériau de revêtement où il existe le long de ladite zone prédéterminée.

15. Appareil selon la revendication 13 ou 14, dans lequel lesdits moyens de chauffage de tube (32) sont des moyens de chauffage par induction électromagnétique.

16. Appareil selon la revendication 14 ou 15, lorsqu'elle dépend de la revendication 14, dans lequel lesdits moyens de chauffage de revêtement (34) sont des moyens de chauffage radiant.

17. Appareil selon l'une quelconque des revendications 13 à 16, dans lequel lesdits moyens de chauffage et d'application de bande (36) comprennent une filière intégrant ou associée à un dispositif de chauffage pour chauffer et extruder une bande du second matériau de revêtement.

18. Appareil selon la revendication 17, dans lequel la filière et le dispositif de chauffage sont montés aussi près que cela est pratique de ladite zone prédéterminée du tube.

19. Appareil selon l'une quelconque des revendications 13 à 18, dans lequel les moyens d'adhésion/de consolidation (38) sont un rouleau de pression.

20. Appareil selon l'une quelconque des revendications 13 à 19, comprenant en outre des moyens de refroidissement pour amener le tube et le(s) matériau(x) de revêtement à refroidir sensiblement à la température ambiante.

21. Appareil selon la revendication 20, dans lequel les moyens de refroidissement sont un système de trempe à l'eau.

22. Appareil selon la revendication 20, dans lequel le tube et le(s) matériau(x) de revêtement sont exposés à l'atmosphère ambiante pour autoriser un refroidissement naturel.
